Europäisches Patentamt

European Patent Office

Office européen des brevets

(11) Veröffentlichungsnummer: **0 314 815**
**A1**

(12) **EUROPÄISCHE PATENTANMELDUNG**

(21) Anmeldenummer: 87116044.6

(22) Anmeldetag: 31.10.87

(51) Int. Cl.⁴: **B60V 3/06 , B60V 1/12**

(43) Veröffentlichungstag der Anmeldung:
10.05.89 Patentbiatt 89/19

(84) Benannte Vertragsstaaten:
**AT BE CH DE ES FR GB GR IT LI LU NL SE**

(71) Anmelder: **MTG Marinetechnik GmbH**
**Wandsbeker Königstrasse 62**
**D-2000 Hamburg 70(DE)**

(72) Erfinder: **Knuepffer, Klaus Dr.Ing.**
**Hugo-Klemm-Str. 61**
**D-2100 Hamburg 90(DE)**

(74) Vertreter: **Dipl.-Ing. H. Hauck Dipl.-Phys. W.**
**Schmitz Dipl.-Ing. E. Graalfs Dipl.-Ing. W.**
**Wehnert Dr.-Ing. W. Döring**
**Neuer Wall 41**
**D-2000 Hamburg 36(DE)**

(54) **Stabilisierungsvorrichtung gegen Stampfen bei Seitenwand-Luftkissenfahrzeugen.**

(57) Stabilisierungsvorrichtung gegen Stampfen für ein Seitenwandluftkissen-Wasserfahrzeug mit zwei parallelen Rümpfen, die mit einer festen Struktur über der Wasseroberfläche miteinander verbunden sind, mit je einer flexiblen Schürze im Vorschiff und Hinterschiff, mit mindestens einem Gebläse zur Erzeugung eines Luftstroms zur Füllung des Luftkissens zwischen den beiden Rümpfen der Bug- und Heckschürze und der festen Struktur, die die beiden Rümpfe verbindet, mit Luftablaßklappen zur Minderung des Luftkissendrucks mit einer geeigneten Steuervorrichtung des Gebläsezustroms, dadurch gekennzeichnet, daß zwischen der Bug- und Heckschürze in einem größeren Abstand von der Bugschürze und parallel zu dieser eine zweite Bugschürze angeordnet ist, daß die Vertikalgeschwindigkeit oder die Vertikalbeschleunigung des Vorschiffes oder die abgetastete Wellenkontur die Regelgröße für den Luftdruck im Luftkissen zwischen den beiden Bugschürzen bildet, und daß der Luftkissendruck zwischen der zweiten Bugschürze und der Heckschürze im Mittel größer ist als der Luftkissendruck zwischen der ersten und zweiten Bugschürze.

# Stabilisierungsvorrichtung gegen Stampfen bei Seitenwand-Luftkissenfahrzeugen

Die Erfindung betrifft eine Stabilisierungsvorrichtung für Seitenwand-Luftkissenfahrzeuge (Surface Effect Ships SES) Seitenwand-Luftkissenfahrzeuge haben zwei Rümpfe, die mit einer festen Struktur über der Wasseroberfläche miteinander verbunden sind. Im Vor- und Hinterschiff befindet sich je eine flexible Schürze, die verhindert, daß die von oben aus mindestens einem Gebläse eingeblasene Luft entweichen kann. Die Ausbildung einer solchen Konstruktion ist aus den europäischen Patentschriften 0 182 694 und 0 182 695 bekannt. Das Fahrzeug wird so vom Luftkissen angehoben, bis es mit den Innenteilen der Rümpfe kaum noch in das Wasser eintaucht. Damit bietet es einen erheblich verminderten Widerstand im Wasser, was die Erzielung hoher Geschwindigkeiten mit verhältnismäßig geringer Antriebsleistung erlaubt. Dieser Vorteil wird bei bestimmten Seegängen von vorn durch Erregung heftiger Bewegungen des Fahrzeuges stark verringert, zumal durch die Bewegungen ein erheblicher Teil der Luft aus dem Luftkissen nach allen Seiten entweichen kann. Obgleich Luftkissenfahrzeuge von ihrem Luftkissen über der Wasseroberfläche in der Schwebe gehalten werden, haben sie dennoch nicht grundsätzlich ein besseres Seegangsverhalten als Einrumpffahrzeuge. Die Unebenheiten der Wasseroberfläche werden über das Luftkissen kaum gedämpft auf den Bootskörper übertragen. Seitenwandluftkissenfahrzeuge verhalten sich im Seegang ähnlich wie Doppel rumpffahrzeuge (Katamarane). Ihre Stampfwinkel (Neigung um horizontale Querachse) und Tauchbewegungen können beträchtlich sein, so daß ihre Einsatzgrenzen kaum günstiger sind als die für gleichgroße Einrumpffahrzeuge. Es sind Bemühungen bekannt, durch aktive Steuerung des Luftkissendrucks eine Dämpfung der Bewegung eines SES im Seegang zu erreichen. Dies geschieht mit Luftablaßklappen (Vent Valves) oder mit Steuerung des Gebläsezustroms (Inlet Guide Vanes) die mit Hilfe von geeigneten Sensoren über eine Steuerungsanlage angesprochen werden und die Tauchschwingungen des Fahrzeuges dämpfen. Diese Maßnahmen beziehen sich jedoch stets auf das ganze Luftkissen, so daß lediglich die parallelen Eintauchungen und Austauchungen beeinflußt werden können, nicht aber die Stampfbewegungen.

Der Erfindung liegt die Aufgabe zugrunde, die Stampfbewegungen und Tauchbewegungen von Seitenwand-Luftkissenfahrzeugen im Seegang wirksam zu dämpfen.

Die Aufgabe wird erfindungsgemäß dadurch gelöst, daß im Vorschiff zwei Bugschürzen mit einem größeren Abstand voneinander angeordnet werden, daß der Luftdruck im Luftkissen zwischen den beiden Bugschürzen in Abhängigkeit von der Vertikalgeschwindigkeit oder Vertikalbeschleunigung des Vorschiffs oder durch Abtastung der Wellenkontur geregelt wird und daß der Luftkissendruck zwischen Heckschürze und zweiter Bugschürze im Mittel größer ist als zwischen der ersten und zweiten Bugschürze.

Damit ergibt sich bei entsprechender Luftzuführung die Möglichkeit, ein kurzes Luftkissen oder ein langes Luftkissen zu erzeugen. Das kurze Luftkissen reicht von der Heckschürze bis zur hinteren Bugschürze, das lange Luftkissen reicht von der Heckschürze bis zur vorderen Bugschürze.

Im glatten Wasser fährt das Schiff auf dem langen Luftkissen. Ein Fahren auf dem kurzen Luftkissen würde das Vorschiff nach unten drücken, also einen vorlastigen Trimm hervorrufen. Der Übergang von langen auf das kurze Luftkissen ist durch Abblasen der Luft zwischen den beiden Bugschürzen leicht zu erreichen.

Trifft nun das auf langem Luftkissen fahrende SES auf einen Seegang von vorn, so wird ein Wellenberg das Vorschiff anheben, ein Wellental das Vorschiff absenken. Wird im gleichen Takt vom langen Luftkissen auf das kurze Luftkissen umgesteuert und umgekehrt, so ist ein Gegenmoment hergestellt, das dem vom Seegang erregten entgegenwirkt. Dies geschieht erfindungsgemäß mit Hilfe von Druckentlastung und Durckerhöhung im Luftkissen zwischen der ersten und zweiten Bugschürze. Die Druckentlastung bzw. Erhöhung wird mit den Luftablaßklappen bzw. dem Gebläsezustrom bewirkt. Geregelt wird die Druckentlastung und Druckerhöhung erfindungsgemäß über Sensoren, die die Bewegung oder die vertikale Geschwindigkeit oder die vertikale Beschleunigung des Schiffes oder die Wellenkontur messen.

Die so ermöglichte Dämpfung der Bewegung im Vorschiff läßt auch das Hinterschiff mit den dort normalerweise angeordneten Propulsionsorganen ruhiger im Wasser liegen.

In den bekannten Ausführungen werden Bugschürzen verwendet, die bei einem Druck von hinten (aus dem Luftkissen) prall werden, hingegen durch Einwirkungen von vorn nachgiebig bleiben. Es handelt sich in der Regel um schräg abwärts gerichtete Finger aus flexiblem Material. Im drucklosen Zustand sind sie schlaff.

Beim Fahren auf langem Luftkissen wäre demnach die hintere Bugschürze schlaff und könnte unkontrollierten Beanspruchungen vom Seegang im Luftkissen ausgesetzt sein. Deswegen wird erfindungsgemäß zwischen den beiden Bugschürzen immer ein etwas geringerer Druck eingestellt als im dahinterliegenden Teil des Luftkissens.

Bei Fahrten im glatten Wasser treten keine Stampfbewegungen auf. Um dem an der zweiten Bugschürze vorbeiströmenden Wasser keinen Strömungswiderstand zu bieten, sieht eine Ausgestaltung der Erfindung vor, die zweite Bugschürze über eine geeignete Vorrichtung, insbesondere Drahtseile, aufholbar zu machen.

Eine weitere Ausgestaltung der Erfindung sieht vor, daß die Luftdrucke im Luftkissen zwischen den Bugschürzen und zwischen der hinteren Bugschürze und der Heckschürze unabhängig voneinander geregelt und gesteuert werden können. Dadurch ist es möglich, neben den beschriebenen Stampfbewegungen auch die Tauchbewegungen des Schiffes zu dämpfen.

## Ansprüche

1. Stabilisierungsvorrichtung gegen Stampfen für ein Seitenwandluftkissen-Wasserfahrzeug mit zwei parallelen Rümpfen, die mit einer festen Struktur über der Wasseroberfläche miteinander verbunden sind, mit je einer flexiblen Schürze im Vorschiff und Hinterschiff, mit mindestens einem Gebläse zur Erzeugung eines Luftstroms zur Füllung des Luftkissens zwischen den beiden Rümpfen der Bug- und Heckschürze und der festen Struktur, die die beiden Rümpfe verbindet, mit Luftablaßklappen zur Min derung des Luftkissendrucks mit einer geeigneten Steuervorrichtung des Gebläsezustroms, dadurch gekennzeichnet, daß zwischen der Bug- und Heckschürze in einem größeren Abstand von der Bugschürze und parallel zu dieser eine zweite Bugschürze angeordnet ist, daß die Vertikalgeschwindigkeit oder die Vertikalbeschleunigung des Vorschiffes oder die abgestastete Wellenkontur die Regelgröße für den Luftdruck im Luftkissen zwischen den beiden Bugschürzen bildet, und daß der Luftkissendruck zwischen der zweiten Bugschürze und der Heckschürze im Mittel größer ist als der Luftkissendruck zwischen der ersten und zweiten Bugschürze.

2. Stabilisierungsvorrichtung nach Anspruch 1, dadurch gekennzeichnet, daß die zweite Bugschürze unabhängig von der ersten Bugschürze und der Heckschürze durch eine geeignete Vorrichtung aufgeholt und befestigt werden kann.

3. Stabilisierungsvorrichtung nach Anspruch 1 und 2, dadurch gekennzeichnet, daß die Luftkissendrucke zwischen erster und zweiter Bugschürze und zwischen zweiter Bugschürze und Heckschürze unabhängig voneinander geregelt und gesteuert werden können.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 133 282 (COCKERELL) <br> * Spalte 4, Zeilen 11-23; Spalte 7, Zeilen 26-68 * <br> --- | 1-3 | B 60 V 3/06 <br> B 60 V 1/12 |
| A | GB-A- 968 192 (HOVERCRAFT DEVELOPMENT LTD) <br> * Seite 2, Zeilen 107-116 * <br> --- | 1 | |
| A | FR-A-2 387 148 (MATTOX) <br> * Insgesamt * <br> ----- | 1 | |

RECHERCHIERTE SACHGEBIETE (Int. Cl.4)

B 60 V

Der vorliegende Recherchenbericht wurde für alle Patentansprüche erstellt

| Recherchenort | Abschlußdatum der Recherche | Prüfer |
|---|---|---|
| DEN HAAG | 01-07-1988 | HAUGLUSTAINE H.P.M. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
   Dokument